# EUROPEAN PATENT SPECIFICATION

(11) **EP 2 396 953 B1**
(45) Date of publication and mention of the grant of the patent: **29.11.2017**
(21) Application number: 10709385.8
(22) Date of filing: 15.02.2010
(51) Int. Cl.: H04L 29/08, H04L 12/58

(54) **COMMUNICATION NETWORK AND METHOD FOR OPERATING A COMMUNICATION NETWORK**
KOMMUNIKATIONSNETZ UND VERFAHREN FÜR DEN BETRIEB EINES KOMMUNIKATIONSNETZES
RÉSEAU DE COMMUNICATION ET PROCÉDÉ DE FONCTIONNEMENT D'UN RÉSEAU DE COMMUNICATION

(30) Priority: 13.02.2009 EP 09002063
(43) Date of publication of application: 21.12.2011
(73) Proprietor: NEC Corporation, Tokyo 108-8001 (JP)
(72) Inventor: ZDARSKY, Frank, 76227 Karlsruhe/Durlach (DE); LIEBSCH, Marco, 69115 Heidelberg (DE)
(74) Representative: Patent- und Rechtsanwälte Ullrich & Naumann
(86) International application number: PCT/EP2010/000914
(87) International publication number: WO 2010/091887

(56) References cited:
- WO-A1-2005/002137
- WO-A2-2008/061042
- US-A1- 2005 136 833
- US-A1- 2007 288 636
- US-A1- 2008 172 458

## Description

The present invention relates to a communication network, comprising at least one mobile terminal attached to a radio access network, said mobile terminal being enabled to run one or more applications, wherein said applications at least partly employ message-oriented application protocols, and a message delegation agent, said message delegation agent being configured to perform the steps of receiving request messages sent by said mobile terminal in order to request message-oriented application related information and/or data, performing the necessary sequence of network protocol operations and associated exchanges with other network components on behalf of said mobile terminal, said network protocol operations including at least address resolution and/or connection establishment, and for each of said request messages sending a single response message back to said mobile terminal, wherein said response message contains at least said message-oriented application related information and/or data requested by said mobile terminal.

Furthermore, the present invention relates to a method for operating a communication network, said network including at least one mobile terminal attached to a radio access network, said mobile terminal being enabled to run one or more applications, wherein said applications at least partly employ message-oriented application protocols, wherein a message delegation agent is provided that performs the steps of receiving request messages sent by said mobile terminal in order to request message-oriented application related information and/or data, performing the necessary sequence of network protocol operations and associated exchanges with other network components on behalf of said mobile terminal, said network protocol operations including at least address resolution and/or connection establishment, and for each of said request messages sending a single response message back to said mobile terminal, wherein said response message contains at least said message-oriented application related information and/or data requested by said mobile terminal.

An increasing number of applications for mobile terminals employ a message-oriented communication paradigm. The characteristic "message-oriented" is to be understood in distinction to a "stream-oriented" communication. Basically, a message-oriented communication is characterized in that it contains single data blocks with each data block serving a well-defined purpose. The most prominent example of message-oriented communication is web-browsing, which uses the Hypertext Transfer Protocol (HTTP) to send request messages for Internet content (web-pages, images, videos, etc.) to a web-server and receive response messages containing the requested content from the server in return.

Another example is web-applications, like e.g. Gmail or Google Docs, and the wide range of web-services, e.g. based on SOAP (Simple Object Access Protocol). Typically, to send messages to request a "remote procedure call" and receive the return values, respectively, web-applications and -services also use HTTP. Apart from this there are many other, non-HTTP-based application layer protocols that use a message-oriented communication paradigm, e.g. XMPP (Extensible Message and Presence Protocol).

To send a single message over the air, a large number of protocol operations have to be performed by the mobile terminal, e.g. IP (Internet Protocol) address resolutions, TCP (Transmission Control Protocol) connection establishments and authentication procedures. Apart from latency and bandwidth overheads, the large number of message transmissions and receptions consume valuable battery power of the terminal and, because the messages are sent over an extended period of time, prevent the terminal from switching into deep power-saving modes.

In the current Internet architecture, message-oriented application protocols incur several overheads in terms of time and data volume:
- The remote communication end-point or resource, which is typically encoded as a URL (Uniform Resource Locator) or URI (Uniform Resource Identifier), needs to be mapped to an IP address to which the messages are sent, e.g. by querying a DNS (Domain Name System) server.
- Message-oriented applications often assume TCP (Transmission Control Protocol) for reliable message transport, which is streaming-oriented rather than message-oriented, and is also connection-oriented and thus requires an end-to-end handshake with the remote peer entity. Other transport layer protocols like SCTP (Stream Control Transmission Protocol) and DCCP (Datagram Congestion Control Protocol) are more message-oriented, but still require handshakes for connection setup and/or congestion control purposes.
- Furthermore, many applications require a secure (e.g. authenticated, encrypted, etc.) message exchange and/or a transaction-based communication, as otherwise several actions may either fail or succeed atomically. The provision of security may incur additional communication overhead for contacting DNS, authentication or transaction servers.

For a mobile terminal this communication overhead is particularly costly, due to its limited communication bandwidth as well as due to higher losses and latency of wireless links, but in particular also because of the higher energy consumption for wireless transmissions. Furthermore, disruptions of wireless connectivity, e.g. due to the mobile terminal being temporarily outside the coverage area of its mobile network, may cause high delays for resuming communication after reconnection, in particular when connections have to be completely set up again.

US 2008/0172458 A1, which describes a system and method for managing Web services data and presence data related to a plurality of users, proposes the deployment of a service that communicates directly with a Web service on behalf of a user of a wireless mobile communication device. The service includes a Web services proxy that combines multiple request/response interactions with different web services into a single communication to the wireless device, thereby conserving network bandwidth.

In view of the above it is an object of the present invention to improve and further develop a communication network and a method for operating a communication network of the initially described type in such a way that the messaging overhead is reduced and, at the same time, response times for the mobile terminal are shortened.

In accordance with the invention, the aforementioned object is accomplished by a communication network comprising the features of claim 1. According to this claim, such a network is characterized in that said message delegation agent is configured to perform anticipatory processing, wherein the communication network further comprises a cache for storing yet unsolicited response messages anticipated by said message delegation agent until they are actually requested by said mobile terminal.

Furthermore, the aforementioned object is accomplished by a method comprising the features of independent claim 10. According to this claim, such a method is characterized in that said message delegation agent performs anticipatory processing, wherein the communication network further comprises a cache for storing yet unsolicited response messages anticipated by said message delegation agent until they are actually requested by said mobile terminal.

According to the present invention it has been recognized that in message-oriented applications mobile terminals typically spend many resources for processing application protocol messages within the IP network stack as well as for message transmissions to the network infrastructure via the physical layer. As a solution for improving the mobile terminal's energy efficiency the present invention proposes introducing a new network function called Message Delegation Agent (MDA) that supports off-loading signaling overhead from the mobile terminal into the network infrastructure. More specifically, the mobile terminal sends request messages for application related information and/or data to the MDA, which then takes care of all operations necessary to deliver the request message to the intended recipient and the respective response message back to the mobile terminal. By the MDA performing all necessary message sequences and associated exchanges of messages with other network components on behalf of the mobile terminal, the communication overhead on the wireless link between the mobile terminal and the network is minimized. As the entire message delegation is handled by the MDA function inside the network, it is possible to respond to a mobile terminal's request message with a single response message from the MDA back to the mobile terminal, wherein the response message contains at least the application related information and/or data requested by the mobile terminal and/or an error code, if the request could not be handled or could only partially be handled. In an ideal case, the protocol overhead between the mobile terminal and the network is reduced to a single MAC (Media Access Control) layer SDU (Service Data Unit) for the request and response message, respectively.

By introducing the MDA function, the present invention provides means to minimize send and receive operations of messages on high-cost wireless interfaces between mobile terminals and their access network. The effect and benefit of such an approach is to optimize the use of power consuming resources of the mobile terminal, such as the radio network interface, the CPU and processing power, etc. Another advantage of the present approach is that it avoids the typical use of TCP or similar resource-intensive transports over the wireless link. This makes it different from proxy-based approaches, like e.g. the one described in Christensen et al: "Enabling Power Management From Network-Attached Computers", Int. J. Network Management, 8, 120-130.

According to the invention the operations that are performed by the MDA include at least address resolution and connection establishment. For instance, the MDA may contact a DNS (Domain Name System) server for mapping an URL or URI contained in a request message from a mobile terminal to the correct IP address. Furthermore, the MDA, on behalf of the mobile terminal, may establish required TCP connections for a reliable message transport.

Advantageously, the MDA is configured to support rule-based - i.e. rules specified by mobile terminal - and/or speculative or anticipatory processing, which may help to further reduce messaging overhead. Additionally or alternatively, the MDA, triggered by a request message from a mobile terminal, may perform a sequence of operations that is conditioned by previous request messages received from that mobile terminal. For instance, the history or characteristic of previous request messages that reflects a specific user behavior may be taken as a basis for MDA operations. Moreover, the sequence of actions performed by the MDA may follow specific network policies. In any case, as an example the MDA could fetch a requested web page as well as the objects embedded into that web page, like e.g. images and animations from one or multiple different sources. The MDA may return the entire information to the mobile terminal in one response, although only the web page itself was (initially) requested.

In particular with regard to a pre-fetch of information/data as described above, the provision of a cache proves to be beneficial. The cache may be employed for storing (yet unsolicited) response messages anticipated by the MDA until they are actually requested by the mobile terminal. The responses may be deleted in case the respective information is not requested by the mobile terminal within a predefined time period.

In a preferred embodiment the operations that are performed by the MDA further include message transport, authentication, billing and/or aggregation of content.

According to a specific embodiment the cache may be implemented on the MDA. Alternatively, the cache may be implemented on the mobile terminal. The benefit of the latter approach for the mobile terminal would be the saving of a request message (e.g. for requesting objects embedded into a web page from the MDA), coming at the cost of potentially having to receive data that is not requested at all.

According to a further preferred embodiment a message aggregation agent (MAA) may be provided in the network. The MAA may be configured to aggregate response messages of one of more MDAs destined to the mobile terminal and/or de-aggregate application protocol messages aggregated by the mobile terminal prior to transmission over the air interface. By introducing one or more MAAs inside the network, the communication overhead for sending and receiving application protocol messages between a mobile terminal and the network infrastructure can be further reduced. For instance, the MAA may be configured to aggregate and batch multiple response messages from an MDA according to the respective mobile terminal's QoS constrains. More specifically, it may be provided that the order of application protocol messages aggregated in a request message, the batch size, and/or the time of transmission of request messages is specified by the respective application running on the mobile terminal, based on its QoS requirements and its delay tolerances (latency, priority, etc.). The parameters may also be specified e.g. by the mobile terminal's operating system or by policy rules.

In a concrete embodiment a MAA may be co-located with a MDA. As regards message processing, it may be provided that the MAAs or the MDAs handle de-aggregated messages concurrently or in sequence.

According to a preferred embodiment the MDA and/or the MAA are located inside the access network to which the mobile terminal is attached. For instance, such implementation would prove to be beneficial with respect to the transmission of confidential or privacy sensitive data, like e.g. banking access data. Alternatively, the MDA and/or the MAA may be located in the mobile terminal's home network. In particular in such case, one or more message forwarding agents may be provided that forward request messages from the mobile terminal to one or more MDAs that may be operated by a network service provider, a (private) user or by a (trusted) third party.

With respect to a particularly effective reduction of signaling overhead, it may be provided the request messages sent by the mobile terminal to an MDA are self-contained with respect to the requested application related information and/or data. In this context, self-contained means that the request message contains all necessary information required by the MDA to generate a response message that contains the entire requested information and/or data. For instance, a mobile terminal may in addition to a request message send further service specific information (e.g. credentials for service authorization, information about intended next actions) or lower protocol layer specific information (e.g. access authentication, QoS info, deep sleep intervals) together with a message, speculating that such information may be needed by the MDA for processing this or future messages. As a result, any further inquiry of the MDA in form of callbacks to the mobile terminal is avoided, thereby minimizing the signaling overhead as far as possible.

In a specific embodiment, the request and/or response messages sent between the mobile terminal and a MDA or MAA includes information regarding the identity of the mobile terminal and/or its user. Identity information is required on the side of the MDA in many cases, since e.g. a service provider has to know the identity of its users, for instance with respect to billing/accounting issues. In many cases, information that only describes the identity of the mobile terminal is not even sufficient; instead information that proves the respective identity is required (e.g. in form of certificates).

As already indicated, the messages may also contain information needed for charging, accounting and billing the mobile terminal user by a service provider. Additionally, the messages may contain information regarding the payment itself, e.g. in form of payment tokens.

With respect to efficient energy savings it may be provided that the request and/or response messages sent between a mobile terminal and MDAs or MAAs include information regarding low power periods of the mobile terminal and/or of the mobile terminal's radio access point. The MAAs can exploit this information for aggregating and batching messages in such a way that it allows both sides to remain in a low power state even longer. Consequently, by replacing periodic tasks with event-driven or batched tasks power saving is optimized both on the mobile terminal side (CPU/OS/application) as well as on the network side.

The timing of reactivation from low power states can be static or dynamically adjusted according to applications' QoS constraints (e.g. delay tolerance). Hence, technology-specific power save modes of the processing (e.g. CPU) and networking (e.g. radio) hardware can be aligned with transmission and expected reception of such batched or aggregated packets on both sides, the mobile terminals and the radio access components. As a result, a synchronization of packet transmission/reception events and batched/aggregated packets with radio specific power save modes and local processing resources can be achieved, thereby enabling extended periods in deep power-saving modes.

Further, the messages may contain information regarding the associated availability to receive packets during active states. In particular, based on this information it may be provided that radio access points adjust the timing and maximize their duration they remain in low power states. The adjustment may take into consideration scheduled downlink messages, which are destined to one or multiple mobile terminals, the message's QoS constrains as well as mobile terminal's availability during active periods to receive messages. Alternatively or additionally, the adjustment may take into consideration QoS constraints of mobile terminal's uplink traffic and associated active period of one or multiple mobile terminals that are served by the radio access point.

In this context it is important to note that in prior art solution power save modes of mobile terminals and also of radio access points in the network infrastructure are not synchronized with terminals' traffic patterns and mobility characteristics. Many radio technology specific power save modes allow reduction of power consumption. However, these techniques are rather statically configured and decoupled from a mobile station's transmit and receive characteristics. Some techniques save power on mobile devices very efficiently, but activate networking resources only based on the mobile terminal's indication to 'wake up' (see for instance G. Anastasi et al.: "802.11 Power-Saving Mode for Mobile Computing in Wi-Fi hotspots: Limitations, Enhancements and Open Issues*"*). Such techniques conflict with reachability aspects of mobile devices and data packets cannot be forwarded to mobile devices, which are in a deep sleep mode to save power. Some proposals require further hardware, are radio network interface specific and rely on a second, low power consuming network interface, which is solely used to detect incoming traffic, and the main network interface is switched off to save power (see for instance Y. Agarwal et al.: *"Somnioligue: Maintaining Network Connectivity While Your Computer Sleeps"*). With state of the art techniques, the efficiency to reduce power consumption on mobile devices and radio network components is far from being optimal and not aligned with mobile applications' networking characteristics and demand to remain reachable.

In a further preferred embodiment it may be provided that the transmission of request messages is expedited or delayed, respectively. According to a first implementation the timing (i.e. expedition or delay) of message transmissions may be carried out in order to maximize the time spent by the mobile terminal's local hardware resources like CPU, radio network interfaces, etc., in low power states to increase energy efficiency of the communication. According to a second implementation the expedition or delay of message transmissions may serve the purpose of maximizing the time spent by network resources in low power states. Network resources may include processing and radio network hardware resources like CPU, radio network interfaces, etc. In the context of achieving energy savings by expediting or delaying messages it proves to be particularly advantageous that the applications and/or the mobile terminal's OS specify policies and/or QoS requirements that are considered in the handling of messages by the mobile terminal and/or by the MDA.

Again with respect to high energy efficiency it may be provided that patterns and timings of low power states are coordinated across multiple radio access points to improve the latency of data forwarding between mobile terminals and the network despite active power management. The coordination may be performed either by a centralized or by a distributed network function. One approach would be to exploit that the mobile terminal is typically covered by multiple access points at the same time. Consequently, when the serving access point is in a low power state, a neighboring access point, which happens to be in an active state, could be used to forward request and response messages to and from the mobile terminal instead.

To further optimize power efficiency, radio access points and/or mobile terminals could tune operating modes of local processing resources, like for instance CPU, during idle times into a low power state or even switch them off temporarily. Moreover, it may be provided that radio access points and/or mobile terminals tune settings of one or multiple radio network interface's power save modes during idle times to result in a long duration of the period they remain in low power states, or even switch one or multiple network interfaces temporarily off. By this means the fact is considered that different wireless communication technologies (e.g. WLAN, UTMS) have different operation parameters that affect the performance characteristic of the respective technology. By tuning the power save mode settings of different interfaces individually, optimizations for different use cases can be achieved.

There are several ways how to design and further develop the teaching of the present invention in an advantageous way. To this end, it is to be referred to the patent claims subordinate to patent claims 1 and 10 on the one hand, and to the following explanation of a preferred example of an embodiment of the invention illustrated by the drawing on the other hand. In connection with the explanation of the preferred example of an embodiment of the invention by the aid of the drawing, generally preferred embodiments and further developments of the teaching will be explained. In the drawings
- Fig. 1: schematically illustrates a request/response message transfer using a message delegation agent according to a first embodiment of the present invention, and
- Fig. 2: schematically illustrates the deployment of a network-side message aggregation agent according to a second embodiment of the present invention.

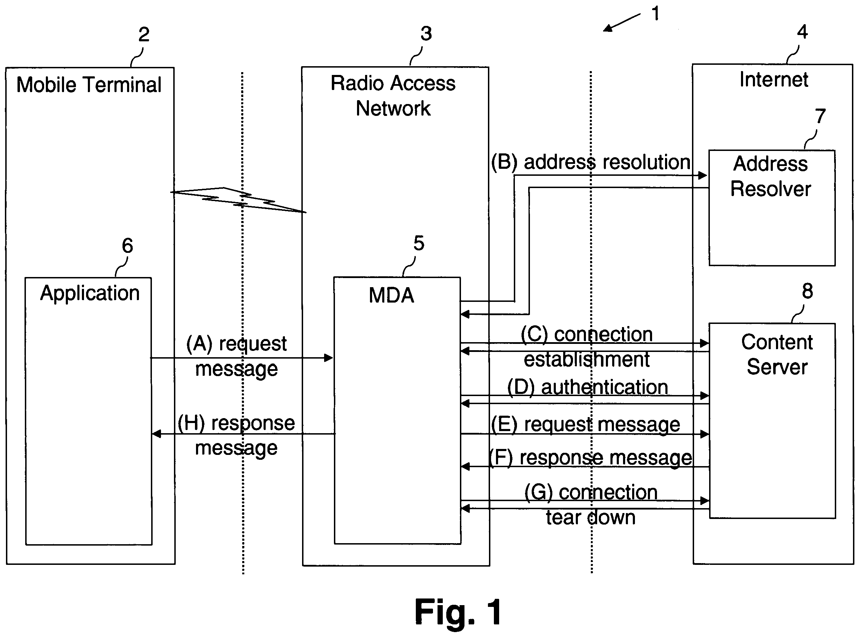

Fig. 1 shows, schematically, an embodiment example of a communication network 1 according to the present invention. As can be obtained from Fig. 1, a mobile terminal 2 has wireless access to a radio access network 3, which is connected to the Internet 4. According to the present invention a message delegation agent (MDA) 5 is provided, which according to the embodiment shown in Fig. 1 is located inside the radio access network 3.

The mobile terminal 2 is running an application 6 that, at least partly, uses message-oriented communication. In the illustrated embodiment it is assumed that the application 6 uses HTTP and encodes the resource or service to be addressed in the form of a URL or URI. It is to be noted that the present invention also works for multiple applications running on the mobile terminal 2 in parallel; however, for the sake of simplicity only one exemplary application 6 is illustrated in Fig. 1.

In a first step A the mobile terminal 2 sends a request message into the access network in order to request application related information and/or data. According to the present invention the request message is not forwarded to the recipient itself, but to one (of possibly multiple) MDAs 5 implemented in the radio access network 3. The MDA 5, upon receipt of the request message, performs the necessary sequence of network protocol operations to deliver the application message from the mobile terminal 2 to the recipient and back. In other words, the MDA 5 acts on behalf of the mobile terminal 2 resulting in an offload of communication overhead for sending and receiving application protocol messages from the mobile terminal 2 into the network infrastructure.

More specifically, upon receipt of the request message the MDA 5 first contacts an address resolver component 7 for address resolution (step B). For instance, address resolver component 7 might be a DNS server located anywhere in the Internet 4. By querying the address resolver component 7, the remote communication end-point or resource addressed by the mobile terminal's 2 request message, which is assumed to be encoded as a URL or URI, is mapped to an IP address to which the request message has to be sent.

In the next step C the MDA 5 establishes a connection to the content server 8 with the resolved IP address. In step D an authentication procedure is carried out with the content server 8. After successful authentication, in step E the MDA 5 forwards the request message to the content server 8. The content server 8 sends back a response message that contains the application related information and or data requested by the mobile terminal 2 (step F). After having received the response message, in step G the MDA 5 tears down the connection to the content server 8. Finally, in step H the MDA 5 forwards the response message to the mobile terminal 2.

By introducing the MDA 5, the high-cost interface between the mobile terminal 2 and the radio access network 3 is significantly disburdened and also the activity required by the mobile terminal 2 for message-oriented information/data retrieval is drastically reduced. In the embodiment illustrated in Fig. 1 the operations of address resolution, connection establishment, authentication, and connection teardown are removed from the mobile terminal 2 resulting in a strong power efficiency optimization on the side of the mobile terminal 2.

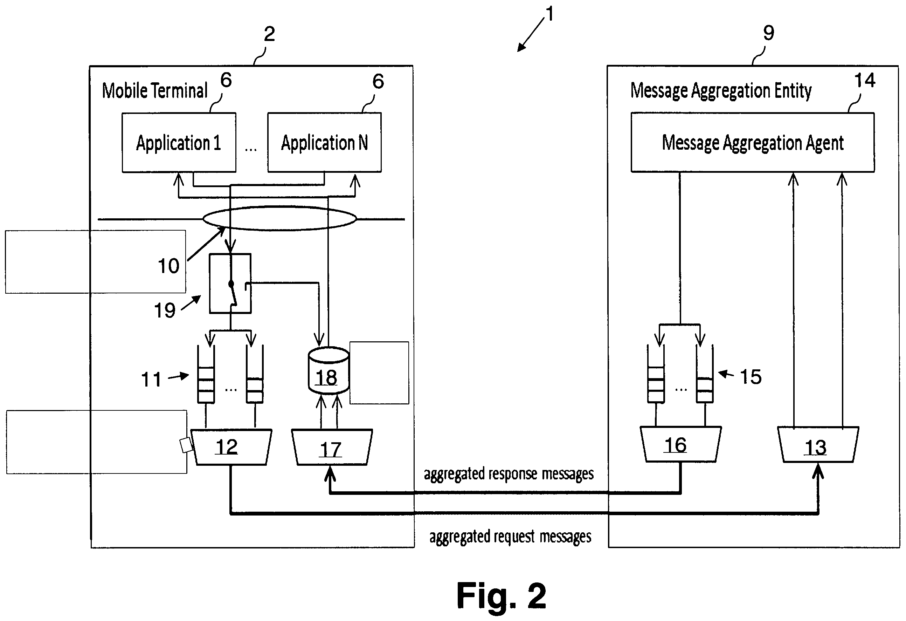

Fig. 2 illustrates schematically a second exemplary embodiment of the present invention with a network-side message aggregation entity 9 for supporting batching and/or aggregation of application protocol messages in order to reduce communication overhead. In Fig. 2 the same reference numerals denote the same components as in Fig. 1.

In the embodiment of Fig. 2, mobile terminal 2 runs a number of N applications 6 in parallel. Request messages of the individual applications 6 - application 1, ..., application N - requesting application related information and/or data are transferred via a message socket 10 with QoS support (e.g. with respect to a maximum latency) to a message queue 11. In the illustrated embodiment the message queue 11 includes two buffers for sorting messages with different priority. It is to be noted that also a single queue, i.e. a single priority solution can be employed. Further, as will be obvious for a skilled person more than two buffers can be implemented in order to realize a more fine-grained message prioritization. Depending on their priority a multiplexer 12 performs scheduling and aggregation of the messages from the buffers. The aggregated request messages generated in such a way are then transmitted via the wireless link to the network infrastructure.

In the preferred implementation, aggregated request messages are directly transmitted as MAC layer Service Data Units, such that the overheads typically incurred by network layer (e.g. IP) and transport layer (e.g. TCP) protocols are avoided, in particular the fragmentation of messages into smaller packets that need to be transmitted individually. However, other options, like using very lightweight network and transport protocols can equally be implemented.

In the illustrated embodiment of Fig. 2, the aggregated request messages are received by the message aggregation entity 9 that is assumed to be implemented in the radio access network 3. The message aggregation entity 9 includes a de-multiplexer 13 that de-aggregates the aggregated request messages and forwards the single request messages to a message aggregation agent MAA 14. The MAA 14 is configured to forward the request messages to an MDA that, for the sake of simplicity, is not shown in Fig. 2. The MDA is in charge of obtaining the response messages as explained in connection with Fig. 1.

Upon receiving response messages from the MDA, the MAA 14 delivers the response messages to a message queue 15 with two (or more) buffers of different priority. Again, it is to be noted that also a single queue, i.e. a single priority solution can be employed. A multiplexer 16 schedules and aggregates response messages from the buffers of the queue 15 to generate an aggregated response message, which is then sent back to the mobile terminal 2, preferably directly inside MAC layer frames.

A de-multiplexer 17 implemented inside the mobile terminal 2 then de-aggregates the aggregated response messages and delivers them to a cache 18. From the cache 18 the response messages are delivered to the respective applications 6. The cache 18 is implemented for the following reason:
An MDA, triggered by a request message from a mobile terminal 2, may perform a sequence of actions that may be conditioned on the result of previous actions and/or own (speculative) anticipation of the MDA. For example, an MDA may fetch a requested webpage as well as the objects embedded into the webpage and return the entire information to the mobile terminal 2 in a single response, although the embedded objects were not yet requested by the mobile terminal 2. In such case, for instance, the embedded objects could be stored in the cache 18 of the mobile terminal 2. When an application 6 at a later point in time requests the embedded objects the corresponding request may first be directed via a logical switch 19 to the cache 18. In case the requested information is available there it can be delivered to the application 6 directly. Only in cases in which the information can not be retrieved from the cache 18, the request will be delivered via the queue 11 and the multiplexer 12 to the mobile terminal's 2 wireless interface to be transmitted to an MDA located in the network infrastructure.

Protocol operation between the MAA(s) 14 and the radio access network 3 (i.e. the radio access points) can be carried out to align message scheduling and batching with radio access points' power save modes and associated low power state periods. Alternatively, radio access points can have an MAA 14 function co-located. Generally, by employing the MAA 14 that batches and schedules messages according to applications' Quality-of-Service requirements (e.g. delay tolerance) and transmit/receive batched messages during controlled and short active times, the timing and the duration of low power states at local processing resources (e.g. CPU) and networking resources (radio network interface) is optimized, thereby maximizing efficiency of power saving.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Communication network, comprising:
at least one mobile terminal (2) attached to a radio access network (3), said mobile terminal (2) being enabled to run one or more applications (6), wherein said applications at least partly employ message-oriented application protocols, and
a message delegation agent (5), said message delegation agent (5) being configured to perform the steps of
receiving request messages sent by said mobile terminal (2) in order to request message-oriented application related information and/or data,
performing the necessary sequence of network protocol operations and associated exchanges with other network components on behalf of said mobile terminal (2), said network protocol operations including at least address resolution and/or connection establishment, and
for each of said request messages sending a single response message back to said mobile terminal (2), wherein said single response message contains at least
said message-oriented application related information and/or data requested by said mobile terminal (2),
**characterized in that** said message delegation agent (5) is configured to perform anticipatory processing, wherein the communication network further comprises a cache (18) for storing yet unsolicited response messages anticipated by said message delegation agent (5) until they are actually requested by said mobile terminal (2).

2. Network according to claim 1, wherein the operations performed by said message delegation agent (5) further include message transport, authentication, billing, and/or aggregation of content.

3. Network according to claim 1 or 2, wherein said message delegation agent (5) is configured to support rule-based processing of said request messages.

4. Network according to any of claims 1 to 3, wherein said cache is implemented on said message delegation agent (5).

5. Network according to any of claims 1 to 4, further comprising a message aggregation agent (14), said message aggregation agent (14) being configured to aggregate and batch response messages of said message delegation agent (5) according to said mobile terminal's (2) Quality of Service constraints.

6. Network according to claim 5, wherein the order of application protocol messages aggregated in a request message, the batch size, and/or the time of transmission of request messages is specified by the application running on said mobile terminal (2) based on its Quality of Service requirements and/or its delay tolerance.

7. Network according to claim 5 or 6, wherein said message delegation agent (5) and said message aggregation agent (14) are co-located.

8. Network according to any of claims 1 to 7, wherein said message delegation agent (5) and/or said message aggregation agent (14) are located inside the access network to which said mobile terminal (2) is attached.

9. Network according to any of claims 1 to 8, further comprising one or more message forwarding agents that are configured to forward request messages from said mobile terminal (2) to one or more message delegation agents (5).

10. Method for operating a communication network, said network including at least one mobile terminal (2) attached to a radio access network, said mobile terminal (2) being enabled to run one or more applications, wherein said applications at least partly employ message-oriented application protocols,
wherein a message delegation agent (5) is provided that performs the steps of
receiving request messages sent by said mobile terminal (2) in order to request message-oriented application related information and/or data,
performing the necessary sequence of network protocol operations and associated exchanges with other network components on behalf of said mobile terminal (2), said network protocol operations including at least address resolution and/or connection establishment, and
for each of said request messages sending a single response message back to said mobile terminal (2), wherein said single response message contains at least
said message-oriented application related information and/or data requested by said mobile terminal (2),
**characterized in that** said message delegation agent (5) performs anticipatory processing, wherein the communication network further comprises a cache (18) for storing yet unsolicited response messages anticipated by said message delegation agent (5) until they are actually requested by said mobile terminal (2).

11. Method according to claim 10, wherein said message delegation agent (5), triggered by a request message from said mobile terminal (2), performs a sequence of operations that is conditioned by previous request messages received from said mobile terminal (2) or that is based on rules specified by said mobile terminal (2).

12. Method according to claim 10 or 11, wherein a message aggregation agent (14) is provided for aggregating and batching response messages of said message delegation agent (5), and/or
wherein said message delegation agent (5) is operated by a network service provider, by a user or by a trusted third party, and/or
wherein said request messages are self-contained with respect to the requested application related information and/or data.

13. Method according to any of claims 10 to 12, wherein said request and/or response messages sent between said mobile terminal (2) and said message delegation agent (5) or said message aggregation agent (14) include information regarding the identity of said mobile terminal (2) and/or its user, and/or
wherein said request and/or response messages sent between said mobile terminal (2) and said message delegation agent (5) or said message aggregation agent (14) include information regarding charging, accounting and/or billing of the mobile terminal (2) user, and/or
wherein said request and/or response messages sent between said mobile terminal (2) and said message delegation agent (5) or said message aggregation agent (14) include information regarding low power periods of said mobile terminal (2) and/or of said mobile terminal's (2) radio access point.

14. Method according to any of claims 10 to 13, wherein the transmission of request messages is expedited or delayed in order to maximize the time duration said mobile terminal's (2) local resources and/or network resources can stay in lower power states, and/or
wherein said applications and/or said mobile terminal's (2) operating system specify policies and/or QoS requirements that are considered in the handling of messages by said mobile terminal (2) and/or by said message delegation agent (5).

15. Method according to any of claims 10 to 14, wherein patterns and timings of low power states of said mobile terminal's (2) local resources and/or network resources are coordinated across multiple radio access points, and/or
wherein said mobile terminal (2) and/or access points of said wireless network are configured to tune power mode settings of one or multiple radio network interfaces during idle times.

## Patentansprüche

1. Kommunikationsnetz, umfassend:
mindestens ein mobiles Endgerät (2), das mit einem Funkzugangsnetz (3) verbunden ist, wobei das mobile Endgerät (2) in der Lage ist, eine oder mehrere Anwendungen (6) auszuführen, wobei die Anwendungen zumindest teilweise nachrichtenorientierte Anwendungsprotokolle verwenden, und
einen Nachrichten-Delegierungsagenten (5), wobei der Nachrichten-Delegierungsagent (5) konfiguriert ist, die folgenden Schritte auszuführen:
Empfangen von Anforderungsnachrichten, die von dem mobilen Endgerät (2) gesendet werden, um nachrichtenorientierte anwendungsbezogene Informationen und/oder Daten anzufordern,
Durchführen der notwendigen Abfolge von Netzwerkprotokolloperationen und zugehörigen Austausche mit anderen Netzwerkkomponenten für das mobile Endgerät (2), wobei die Netzwerkprotokolloperationen mindestens Adressenauflösung und/oder Verbindungsaufbau umfassen, und
für jede der Anforderungsnachrichten, Zurücksenden einer einzigen Antwortnachricht an das mobile Endgerät (2), wobei die einzige Antwortnachricht zumindest die von dem mobilen Endgerät (2) angeforderten nachrichtenorientierten anwendungsbezogenen Informationen und/oder Daten enthält,
**dadurch gekennzeichnet, dass** der Nachrichten-Delegierungsagent (5) konfiguriert ist, eine vorausschauende Bearbeitung auszuführen, wobei das Kommunikationsnetz des Weiteren einen Cache (18) umfasst, um noch nicht angeforderte Antwortnachrichten, die von dem Nachrichten-Delegierungsagenten (5) antizipiert werden, zu speichern, bis sie tatsächlich von dem mobilen Endgerät (2) angefordert werden.

2. Netzwerk nach Anspruch 1, wobei die von dem Nachrichten-Delegierungsagenten (5) ausgeführten Operationen des Weiteren Nachrichtentransport, Authentifizierung, Abrechnung und/oder Aggregation von Inhalten umfassen.

3. Netzwerk nach Anspruch 1 oder 2, wobei der Nachrichten-Delegierungsagent (5) so konfiguriert ist, dass er eine regelbasierte Verarbeitung der Anforderungsnachrichten unterstützt.

4. Netzwerk nach einem der Ansprüche 1 bis 3, wobei der Cache auf dem Nachrichten-Delegierungsagenten (5) implementiert ist.

5. Netzwerk nach einem der Ansprüche 1 bis 4, des Weiteren umfassend einen Nachrichten-Aggregationsagenten (14), wobei der Nachrichten-Aggregationsagent (14) konfiguriert ist, Antwortnachrichten des Nachrichten-Delegierungsagenten (5) entsprechend den Quality of Service Einschränkungen des mobilen Endgeräts (2) zu aggregieren und stapelweise zu verarbeiten.

6. Netzwerk nach Anspruch 5, wobei die Reihenfolge der in einer Anforderungsnachricht aggregierten Anwendungsprotokoll-Nachrichten, die Batchgröße und/oder die Zeit der Übertragung von Anforderungsnachrichten von der auf dem mobilen Endgerät (2) laufenden Anwendung auf Basis ihrer Quality of Service Anforderungen und/oder ihrer Verzögerungstoleranz festgesetzt wird.

7. Netzwerk nach Anspruch 5 oder 6, wobei der Nachrichten-Delegierungsagent (5) und der Nachrichten-Aggregationsagent (14) zusammen installiert sind.

8. Netzwerk nach einem der Ansprüche 1 bis 7, wobei der Nachrichten-Delegierungsagent (5) und/oder der Nachrichten-Aggregationsagent (14) innerhalb des Zugangsnetzes angeordnet sind, mit dem das mobile Endgerät (2) verbunden ist.

9. Netzwerk nach einem der Ansprüche 1 bis 8, des Weiteren umfassend einen oder mehrere Nachrichten-Weiterleitungsagenten, die konfiguriert sind, Anforderungsnachrichten von dem mobilen Endgerät (2) an einen oder mehrere Nachrichten-Delegierungsagenten (5) weiterzuleiten.

10. Verfahren zum Betreiben eines Kommunikationsnetzes, wobei das Netzwerk mindestens ein mit einem Funkzugangsnetz verbundenes mobiles Endgerät (2) umfasst, wobei das mobile Endgerät (2) in der Lage ist, eine oder mehrere Anwendungen auszuführen, wobei die Anwendungen zumindest teilweise nachrichtenorientierte Anwendungsprotokolle verwenden,
wobei ein Nachrichten-Delegierungsagent (5) bereitgestellt wird, der die folgenden Schritte ausführt
Empfangen von Anforderungsnachrichten, die von dem mobilen Endgerät (2) gesendet werden, um nachrichtenorientierte anwendungsbezogene Informationen und/oder Daten anzufordern,
Durchführen der notwendigen Abfolge von Netzwerkprotokolloperationen und zugehörigen Austausche mit anderen Netzwerkkomponenten für das mobile Endgerät (2), wobei die Netzwerkprotokolloperationen mindestens Adressenauflösung und/oder Verbindungsaufbau umfassen, und
für jede der Anforderungsnachrichten, Zurücksenden einer einzigen Antwortnachricht an das mobile Endgerät (2), wobei die einzige Antwortnachricht zumindest die von dem mobilen Endgerät (2) angeforderten nachrichtenorientierten anwendungsbezogenen Informationen und/oder Daten enthält,
**dadurch gekennzeichnet, dass** der Nachrichten-Delegierungsagent (5) eine vorausschauende Bearbeitung ausführt, wobei das Kommunikationsnetz des Weiteren einen Cache (18) umfasst, um noch nicht angeforderte Antwortnachrichten, die von dem Nachrichten-Delegierungsagenten (5) antizipiert werden, zu speichern, bis sie tatsächlich von dem mobilen Endgerät (2) angefordert werden.

11. Verfahren nach Anspruch 10, wobei der Nachrichten-Delegierungsagent (5), ausgelöst durch eine Anforderungsnachricht von dem mobilen Endgerät (2), eine Folge von Operationen durchführt, die an vorausgegangene von dem mobilen Endgerät (2) empfangene Anforderungsnachrichten angepasst ist oder die auf von dem mobilen Endgerät (2) spezifizierten Regeln basiert.

12. Verfahren nach Anspruch 10 oder 11, wobei ein Nachrichten-Aggregationsagent (14) zum Aggregieren und Batching von Antwortnachrichten des Nachrichten-Delegierungsagenten (5) vorgesehen ist, und/oder
wobei der Nachrichten-Delegierungsagent (5) von einem Netzdienstanbieter, von einem Nutzer oder von einem vertrauenswürdigen Dritten betrieben wird, und/oder
wobei die Anforderungsnachrichten in Bezug auf die angeforderten anwendungsbezogenen Informationen und/oder Daten in sich geschlossen sind.

13. Verfahren nach einem der Ansprüche 10 bis 12, wobei die zwischen dem mobilen Endgerät (2) und dem Nachrichten-Delegierungsagenten (5) oder dem Nachrichten-Aggregationsagenten (14) gesendeten Anforderungs- und/oder Antwortnachrichten Informationen über die Identität des mobilen Endgeräts (2) und/oder dessen Nutzers umfassen, und/oder
wobei die zwischen dem mobilen Endgerät (2) und dem Nachrichten-Delegierungsagenten (5) oder dem Nachrichten-Aggregationsagenten (14) gesendeten Anforderungs- und/oder Antwortnachrichten Informationen bezüglich der Aufladung, der Abrechnung und/oder des Billings des mobilen Endgerät (2) Nutzers umfassen, und/oder
wobei die zwischen dem mobilen Endgerät (2) und dem Nachrichten-Delegierungsagenten (5) oder dem Nachrichten-Aggregationsagenten (14) gesendeten Anforderungs- und/oder Antwortnachrichten Informationen betreffend Perioden niedriger Leistung des mobilen Endgeräts (2) und/oder des Funkzugangspunkts des mobilen Endgeräts (2) umfassen.

14. Verfahren nach einem der Ansprüche 10 bis 13, wobei die Übertragung von Anforderungsnachrichten beschleunigt oder verzögert wird, um die Zeitdauer, welche die lokalen Ressourcen des mobilen Endgeräts (2) und/oder Netzwerkressourcen in Zuständen niedrigerer Leistung bleiben können, zu maximieren, und/oder
wobei die Anwendungen und/oder das Betriebssystem des mobilen Endgeräts (2) Richtlinien und/oder QoS-Anforderungen spezifizieren, die bei der Handhabung von Nachrichten durch das mobile Endgerät (2) und/oder durch den Nachrichten-Delegierungsagenten (5) berücksichtigt werden.

15. Verfahren nach einem der Ansprüche 10 bis 14, wobei Muster und zeitliche Abstimmungen von Zuständen niedrigerer Leistung der lokalen Ressourcen des mobilen Endgeräts (2) und/oder von Netzwerkressourcen über mehrere Funkzugangspunkte hinweg koordiniert werden, und/oder
wobei das mobile Endgerät (2) und/oder Zugangspunkte des drahtlosen Netzwerks konfiguriert sind, Leistungsmodus-Einstellungen von einer oder mehreren Funknetzschnittstellen während inaktiver Zeiten abzustimmen.

## Revendications

1. Réseau de communication, comprenant :
au moins un terminal mobile (2) rattaché à un réseau d'accès radio (3), ledit terminal mobile (2) étant activé pour exécuter une ou plusieurs applications (6), où lesdites applications utilisent au moins en partie des protocoles d'application orientés message, et
un agent de délégation de messages (5), ledit agent de délégation de messages (5) étant configuré pour effectuer les étapes consistant à
recevoir des messages de demande envoyés par ledit terminal mobile (2) afin de demander des informations et/ou des données liées à une application orientée message,
effectuer la séquence nécessaire d'opérations de protocole de réseau et des échanges associés avec d'autres composants de réseau pour le compte dudit terminal mobile (2), lesdites opérations de protocole de réseau incluant au moins une résolution d'adresse et/ou un établissement de connexion, et
pour chacun desdits messages de demande, renvoyer un seul message de réponse audit terminal mobile (2), où ledit seul message de réponse contient au moins lesdites informations et/ou données liées à une application orientée message demandées par ledit terminal mobile (2),
**caractérisé en ce que** ledit agent de délégation de messages (5) est configuré pour effectuer un traitement anticipé, où le réseau de communication comprend en outre un cache (18) pour stocker des messages de réponse encore non sollicités anticipés par ledit agent de délégation de messages (5) jusqu'à ce qu'ils soient réellement demandés par ledit terminal mobile (2).

2. Réseau selon la revendication 1, dans lequel les opérations effectuées par ledit agent de délégation de messages (5) incluent en outre le transport de message, l'authentification, la facturation, et/ou l'agrégation de contenu.

3. Réseau selon la revendication 1 ou 2, dans lequel ledit agent de délégation de messages (5) est configuré pour supporter un traitement basé sur des règles desdits messages de demande.

4. Réseau selon l'une quelconque des revendications 1 à 3, dans lequel ledit cache est mis en oeuvre sur ledit agent de délégation de messages (5).

5. Réseau selon l'une quelconque des revendications 1 à 4, comprenant en outre un agent d'agrégation de messages (14), ledit agent d'agrégation de messages (14) étant configuré pour agréger et mettre en lots des messages de réponse dudit agent de délégation de messages (5) selon les contraintes de Qualité de service dudit terminal mobile (2).

6. Réseau selon la revendication 5, dans lequel l'ordre de messages de protocole d'application agrégés dans un message de demande, la taille de lot, et/ou le temps de transmission de messages de demande est spécifié par l'application s'exécutant sur ledit terminal mobile (2) sur la base de ses exigences de Qualité de Service et/ou de sa tolérance au retard.

7. Réseau selon la revendication 5 ou 6, dans lequel ledit agent de délégation de messages (5) et ledit agent d'agrégation de messages (14) sont co-localisés.

8. Réseau selon l'une quelconque des revendications 1 à 7, dans lequel ledit agent de délégation de messages (5) et/ou ledit agent d'agrégation de messages (14) sont localisés à l'intérieur du réseau d'accès auquel ledit terminal mobile (2) est rattaché.

9. Réseau selon l'une quelconque des revendications 1 à 8, comprenant en outre un ou plusieurs agents de transfert de messages qui sont configurés pour transférer des messages de demande dudit terminal mobile (2) à un ou plusieurs agents de délégation de messages (5).

10. Procédé pour exploiter un réseau de communication, ledit réseau incluant au moins un terminal mobile (2) rattaché à un réseau d'accès radio, ledit terminal mobile (2) étant activé pour exécuter une ou plusieurs applications, où lesdites applications utilisent au moins en partie des protocoles d'application orientés message,
dans lequel un agent de délégation de messages (5) est pourvu qui effectue les étapes consistant à
recevoir des messages de demande envoyés par ledit terminal mobile (2) afin de demander des informations et/ou des données liées à une application orientée message,
effectuer la séquence nécessaire d'opérations de protocole de réseau et des échanges associés avec d'autres composants de réseau pour le compte dudit terminal mobile (2), lesdites opérations de protocole de réseau incluant au moins une résolution d'adresse et/ou un établissement de connexion, et
pour chacun desdits messages de demande, renvoyer un seul message de réponse audit terminal mobile (2), où ledit seul message de réponse contient au moins lesdites informations et/ou données liées à une application orientée message demandées par ledit terminal mobile (2),
**caractérisé en ce que** ledit agent de délégation de messages (5) effectue un traitement anticipé, où le réseau de communication comprend en outre un cache (18) pour stocker des messages de réponse encore non sollicités anticipés par ledit agent de délégation de messages (5) jusqu'à ce qu'ils soient réellement demandés par ledit terminal mobile (2).

11. Procédé selon la revendication 10, dans lequel ledit agent de délégation de messages (5), déclenché par un message de demande en provenance dudit terminal mobile (2), effectue une séquence d'opérations qui est conditionnée par des messages de demande précédents reçus en provenance dudit terminal mobile (2) ou qui est basée sur des règles spécifiées par ledit terminal mobile (2).

12. Procédé selon la revendication 10 ou 11, dans lequel un agent d'agrégation de messages (14) est pourvu pour agréger et mettre en lots des messages de réponse dudit agent de délégation de messages (5), et/ou
dans lequel ledit agent de délégation de messages (5) est exploité par un fournisseur de services de réseau, par un utilisateur ou par un tiers de confiance, et/ou
dans lequel lesdits messages de demande sont autonomes par rapport aux informations et/ou données liées à une application demandées.

13. Procédé selon l'une quelconque des revendications 10 à 12, dans lequel lesdits messages de demande et/ou de réponse envoyés entre ledit terminal mobile (2) et ledit agent de délégation de messages (5) ou ledit agent d'agrégation de messages (14) incluent des informations concernant l'identité dudit terminal mobile (2) et/ou de son utilisateur, et/ou
dans lequel lesdits messages de demande et/ou de réponse envoyés entre ledit terminal mobile (2) et ledit agent de délégation de messages (5) ou ledit agent d'agrégation de messages (14) incluent des informations concernant la taxation, la comptabilisation et/ou la facturation de l'utilisateur du terminal mobile (2), et/ou
dans lequel lesdits messages de demande et/ou de réponse envoyés entre ledit terminal mobile (2) et ledit agent de délégation de messages (5) ou ledit agent d'agrégation de messages (14) incluent des informations concernant des périodes de faible puissance dudit terminal mobile (2) et/ou du point d'accès radio dudit terminal mobile (2).

14. Procédé selon l'une quelconque des revendications 10 à 13, dans lequel la transmission de messages de demande est accélérée ou retardée afin de maximiser la durée pendant laquelle les ressources locales et/ou les ressources de réseau dudit terminal mobile (2) peuvent rester dans des états de faible puissance, et/ou
dans lequel lesdites applications et/ou le système d'exploitation dudit terminal mobile (2) spécifient des politiques et/ou des exigences QoS qui sont considérées dans la gestion de messages par ledit terminal mobile (2) et/ou par ledit agent de délégation de messages (5).

15. Procédé selon l'une quelconque des revendications 10 à 14, dans lequel des motifs et des positionnements temporels d'états de faible puissance des ressources locales et/ou des ressources de réseau dudit terminal mobile (2) sont coordonnés à travers de multiples points d'accès radio, et/ou
dans lequel ledit terminal mobile (2) et/ou les points d'accès dudit réseau sans fil sont configurés pour accorder des réglages de mode de puissance d'une ou de multiples interfaces de réseau radio pendant des temps d'inactivité.
